# EUROPÄISCHE PATENTSCHRIFT

(11) **EP 3 509 872 B1**
(45) Veröffentlichungstag und Bekanntmachung des Hinweises auf die Patenterteilung: **04.05.2022**
(21) Anmeldenummer: 17764823.5
(22) Anmeldetag: 12.09.2017
(51) Int. Cl.: B60B 17/00

(54) **MEHRTEILIGES, GEFEDERTES SCHIENENRAD**
MULTI-PART, SPRUNG RAIL WHEEL
ROUE FERROVIAIRE ÉLASTIQUE EN PLUSIEURS PARTIES

(30) Priorität: 12.09.2016 DE 102016117104
(43) Veröffentlichungstag der Anmeldung: 17.07.2019
(73) Patentinhaber: Bochumer Verein Verkehrstechnik GmbH, 44793 Bochum (DE)
(72) Erfinder: MURAWA, Franz, 44805 Bochum (DE)
(74) Vertreter: Cohausz & Florack
(86) Internationale Anmeldenummer: PCT/EP2017/072826
(87) Internationale Veröffentlichungsnummer: WO 2018/046745

(56) Entgegenhaltungen:
- EP-A1- 0 679 540
- EP-B1- 0 733 493
- CN-A- 104 385 842
- DE-A1- 4 230 137
- US-A- 3 127 211

## Beschreibung

Die Erfindung betrifft ein mehrteiliges Schienenrad mit einem Radreifen, einem Radkörper und einem zwischen dem Radreifen und dem Radkörper angeordneten elastischen Körper, über den der Radreifen auf dem Radkörper abgestützt ist, sowie mit einem von der einen Stirnseite her an den Radkörper angesetzten Spannelement, über das der elastische Körper mittels an dem Radkörper angreifender Spannmittel gegen den Radkörper und den Radreifen verspannt ist, wobei der Radkörper mindestens in dem Bereich, gegen den das Spannmittel wirkt, aus einem Leichtmetallwerkstoff besteht.

Ein Schienenrad dieser Art ist beispielsweise aus der EP 0 733 493 B1 bekannt. Das bekannte Schienenrad ist aus einem aus Stahl geschmiedeten bzw. gewalzten Radreifen und einem aus einer Aluminiumlegierung oder einem anderen Leichtmetallwerkstoff hergestellten Radkörper gebaut, welcher die Radnabe umfasst, über die das Schienenrad im Gebrauch auf der Achse des jeweiligen Schienenfahrzeugs gelagert ist. In dem Radreifen sind Aussparungen und in der Radfelge Nuten zum Einlegen von Gummiringen zwischen dem Radreifen und dem Umfang des Radkörpers vorgesehen. Die Gummiringe bilden einen elastischen Körper, über die der Radreifen elastisch auf der am Umfang des Radkörpers gebildeten Radfelge abgestützt ist. Durch einen als Spannelement vorgesehenen keilförmigen Spannring sind die Gummiringe zwischen dem Radkörper und dem Radreifen verspannt. Zu diesem Zweck ist von der einen Stirnseite des Radkörpers her ein an deren Außenumfang umlaufender Umfangsabsatz ausgebildet, auf den der Spannring aufgeschoben ist. Über seinen Umfang verteilte, als Spannmittel dienende Befestigungsschrauben ziehen den Spannring gegen einen an der gegenüberliegenden Stirnseite umlaufenden Umfangsabschnitt der Radfelge. Die Befestigungsschrauben greifen dazu an dem Radkörper an, indem sie achsparallel zur Drehachse des Schienenrads ausgerichtet durch in den Spannring eingeformte Durchgangsöffnungen geführt und in Gewindeöffnungen eingeschraubt sind, die in den Umfangsabschnitt des Radkörpers eingeformt sind.

Zu Beginn des Zusammenbaus des bekannten Schienenrads befindet sich der Spannring in axialer Richtung der Drehachse in einem Abstand zum Umfangsabschnitt des Radkörpers. Die Gummiringe sitzen dabei an einem tiefen Punkt der V-förmig aufeinander zulaufenden Umfangsflächen des Spannrings und des Umfangsabschnitts des Radkörpers. Werden anschließend die Befestigungsschrauben angezogen, werden die Gummiringe zunehmend in radialer Richtung geweitet und dabei gegen die Innenumfangsfläche des auf dem äußeren der Ringe sitzenden Radreifens gedrückt. Bei fertig verspanntem Schienenrad ist der Radreifen auf diese Weise mit einer definierten elastischen Spannkraft auf dem Radkörper gehalten und gleichzeitig elastisch gegen die Radfelge abgestützt. Um die Verschiebung des Spannrings zu erleichtern und Verschleißerscheinungen zu mindern, kann die um den Umfang des Umfangsabsatzes des Radkörpers umlaufende Fläche mit einer dauerhaften und vorzugsweise in die Flächen eingelagerten Beschichtung versehen sein.

Bei nach dem Muster des voranstehend erläuterten Schienenrads gebauten Schienenrädern bilden der Radkörper und der den elastischen Körper tragende Spannring nach der Fertigmontage eine Einheit. Zur sicheren Übertragung aller im Betriebseinsatz auftretenden Kräfte kann der Spannring zusätzlich mittels Presspassung auf dem Radkörper fixiert werden.

Die Praxis zeigt allerdings, dass beim Verspannen der Befestigungsschrauben große Kräfte auftreten. Diese Kräfte resultieren aus den Relativbewegungen, zu denen es im Zuge des über die Schrägflächen des Spannrings und des Umfangsabsatzes des Radkörpers erfolgenden Aufweitens des elastischen Körpers kommt. In Kombination damit, dass während der Bewegungen gleichzeitig auch der Pressverband zwischen dem Radreifen und dem Radkörper hergestellt wird, führen diese Bewegungen zu erheblichen Reibungskräften, die durch die über die Befestigungsschrauben übertragenen Spannkräfte überwunden werden müssen.

Hier ergibt sich die Gefahr, dass der Leichtmetallwerkstoff, aus dem der Radkörper im Bereich seines Umfangsabschnitts besteht, in den die Gewinde geschnitten sind, in die die Befestigungsschrauben eingeschraubt werden, den bei der Montage oder im Einsatz auftretenden Belastungen nicht standhält. Dieser Gefahr kann entsprechend den für die Gestaltung von Schraubverbindungen, bei denen ein Verbindungspartner aus einem Aluminiumwerkstoff besteht, geltenden Prinzipien dadurch begegnet werden, dass die Einschraublängen der Schrauben vergrößert oder vielfach zusätzliche Gewindeeinsätze aus Stahl in in den Radkörper eingebrachten Aufnahmegewinde eingesetzt werden. Ein Nachteil dieser Maßnahmen ist jedoch, dass die zur Sicherung der Schraubverbindung notwendige Klemmlänge der Schrauben reduziert wird und bei Verwendung von zusätzlichen Gewindeeinsätzen der erforderliche Durchmesser größer wird. Dies führt wiederum zu einer Verschlechterung des Festigkeitsverhaltens der die Aufnahmegewinde jeweils umgebenden Bereiche des Radkörpers. Ebenso werden bei Verwendung von Einschraubhülsen die Möglichkeiten der Schraubensicherungen insbesondere durch Kleben eingeschränkt. Gleichzeitig besteht die Gefahr, dass beim Lösen der Befestigungsschrauben die Einschraubhülsen ebenfalls aus dem Radkörper herausgedreht werden.

In der CN 104 385 842 A ist ein Beispiel für eine Bauform von Schienenrädern gezeigt, bei der die zum Verspannen des elastischen Elements benötigten Spannkräfte nicht auf den jeweiligen Radkörper des Schienenrads wirken, sondern auf ein zusätzliches Gegenlagerelement. So ist bei diesem Stand der Technik beidseits der Felge jeweils ein Spannring angeordnet. Diese Spannringe sind mittels Spannschrauben gegeneinander verspannt. Auf diese Weise wird das am äußeren Umfang der Spannringe anliegende elastische Element gegen den außen liegenden Radreifen gedrückt. Dabei liegen die Spannringe lose an der Felge an.

In vergleichbarer Weise werden beim Stand der Technik gemäß US 3,127,211 A an den beiden Stirnseiten der Felge angeordnete, längs der Drehachse des Schienenrads verschiebbare Spannringe mittels Spannschrauben gegeneinander verspannt werden.

In der EP 0 679 540 A1 ist ein Schienenrad gezeigt, bei dem als Gegenlagerelemente für als Spannelemente dienende Schrauben separate Muttern vorgesehen sind, die jeweils in in den Radkörper des Schienenrads eingeformte Einsenkungen sitzen. Die Einsenkungen weisen in Umfangsrichtung eine Anlagefläche auf, gegen die die jeweilige Mutter mit einer ihrer Umfangsflächen anliegt. Auf diese Weise sind die Muttern formschlüssig in den Einsenkungen festgelegt. Dabei ist es auch hier für die Montage und das Verspannen erforderlich, dass die Muttern lose axial verschiebbar in der jeweiligen Einsenkung sitzen. Entsprechend ist die Geometrie der Einsenkungen bei dem bekannten Schienenrad so ausgebildet, dass sich die Muttern in axialer Richtung längs der ihnen zugeordneten Anlagefläche bewegen können.

Vor dem Hintergrund des Standes der Technik hat sich somit die Aufgabe ergeben, ein mehrteiliges, in sich elastisch gefedertes Schienenrad der voranstehend erläuterten Art zu schaffen, bei dem bei einfacher Montierbarkeit und De-Montierbarkeit mit einfachen Mitteln eine sichere Verspannung der zusammenwirkenden Bauteile gewährleistet ist.

Die Erfindung hat diese Aufgabe durch das in Anspruch 1 angegebene Schienenrad gelöst.

Vorteilhafte Ausgestaltungen der Erfindung sind in den abhängigen Ansprüchen angegeben und werden nachfolgend wie der allgemeine Erfindungsgedanke im Einzelnen erläutert.

In Übereinstimmung mit dem eingangs erläuterten Stand der Technik umfasst ein erfindungsgemäßes mehrteiliges Schienenrad demnach einen Radreifen, einen Radkörper, einen zwischen dem Radreifen und dem Radkörper angeordneten elastischen Körper, über den der Radreifen auf dem Radkörper abgestützt ist, sowie mindestens ein von der einen Stirnseite her an den Radkörper angesetztes Spannelement, über das der elastische Körper mittels an dem Radkörper angreifender Spannmittel gegen den Radkörper und den Radreifen verspannt ist, wobei der Radkörper mindestens in dem Bereich, gegen den das Spannmittel wirkt, aus einem Leichtmetallwerkstoff besteht.

Erfindungsgemäß ist bei einem solchen Schienenrad nun an der dem Spannelement axial gegenüberliegenden Stirnseite des Radkörpers als Gegenlager, an dem die zum Verspannen des Spannelements vorgesehenen Spannmittel angreifen, mindestens ein Gegenlagerelement vorgesehen, das aus einem Werkstoff besteht, der eine höhere Festigkeit aufweist als der Leichtmetallwerkstoff des Radkörpers.

Ein erfindungsgemäßes Schienenrad ist also so ausgestaltet, dass auf der einen Außenseite des Radkörpers ein unabhängig vom Radkörper vorgefertigtes Gegenlagerelement vorgesehen ist. Das Gegenlagerelement kann auf diese Weise unabhängig vom Werkstoff des Radkörpers so ausgelegt werden, dass es einerseits die auftretenden Kräfte aufgrund seiner Materialeigenschaften sicher aufnehmen kann und andererseits die von ihm aufgenommenen Kräfte großflächig auf den ihm zugeordneten Bereich des Radkörpers verteilt, so dass lokale Belastungsspitzen vermieden und damit einhergehend die Gefahr einer Beschädigung des Leichtmetall- Schienenradkörpers sicher vermieden wird. Die Erfindung erlaubt es auf diese Weise auch, das Leichtmetallmaterial, aus dem der Radkörper eines erfindungsgemäßen Schienenrads zumindest in dem Bereich besteht, gegen den die Verspannung des Spannelements vorgenommen wird, ohne Rücksicht auf irgendwelche Kräfte auszulegen, welche über die Spannmittel direkt eingeleitet werden und dementsprechend vom Material des Radkörpers ebenso direkt aufgenommen werden müssten. Dementsprechend lassen sich unter Berücksichtigung der üblichen Regeln für die Auslegung von Leichtmetallbauteilen der hier in Rede stehenden Art für den Radkörper sämtliche in der Praxis bewährten oder für diesen Zweck noch entwickelten Leichtmetallwerkstoffe, insbesondere Werkstoffe auf Aluminiumbasis, verwenden.

Grundsätzlich ist für die Verspannung des Spannelements an oder auf dem Radkörper jedes Element geeignet, das in der Lage ist, die erforderlichen Spannkräfte zu übertragen und das Spannelement bei fertiger Montage in seiner Spannstellung zu halten. Denkbar sind hier sämtliche Spannelemente, die durch Kraft- oder Formschluss den sicheren Halt des Spannelements am Radkörper bewirken können. In der Praxis eignen sich hierzu insbesondere Spannschrauben, wie sie aus dem Stand der Technik an sich ebenfalls bekannt sind. Diese lassen sich zum Verspannen des Spannelements in Gewindeöffnungen schrauben, welche in das Gegenlagerelement eingeformt sind.

Eine kostengünstige und gleichzeitig praxisgerechte Ausgestaltung der Erfindung sieht vor, dass das Gegenlagerelement aus einem Stahlwerkstoff mit ausreichender Festigkeit besteht. Hierfür kommen insbesondere hochfeste Stahlgüten in Frage, wie beispielsweise die unter den Bezeichnungen 42CrMo4 (Werkstoffnr. 1.7225), 34CrNiMo6 (Werkstoffnr. 1.6582) oder 30CrNiMo8 (Werkstoffnr. 1.6580) bekannten Stähle.

Die Verschraubung des Radfelgenrings mit einem aus einem hochfesten Material bestehenden Gegenlagerelement hat den besonderen Vorteil, dass die in das Gegenlagerelement eingeformten Gewindelöcher eine stahltypische Einschraublänge aufweisen können. Dadurch werden schon bei vergleichbar kurzer Gewindelänge große Spannkräfte und damit einhergehend eine gute Sicherungswirkung der Schraubverbindung selbst erreicht.

Als zusätzliche Sicherung der als Spannmittel eingesetzten Befestigungsschrauben gegen selbsttätiges Verdrehen oder Lösen kann ein geeigneter, marktüblicher Schraubenkleber verwendet werden. Dadurch kann auf die Verwendung von mechanisch wirkenden Sicherungselementen, wie an das Spannmittel angeschlagene Rippen oder desgleichen, verzichtet werden, die sich in die Oberfläche des Schienenrads fressen und zu unzulässigen Beschädigungen führen würden und unerwünschte Setzungen der durch die Spannmittel bewirkten Verbindung verursachen könnten.

Das Gegenlagerelement ist praktischerweise in einem Bereich angeordnet, der an die außenumfangseitig am Radkörper ausgebildete Radfelge angrenzt.

Der Radkörper kann in an sich bekannter Weise einstückig aus einem Leichtmetallwerkstoff, insbesondere einem Aluminiumwerkstoff, gefertigt, insbesondere geschmiedet, sein.

Der mindestens eine bei einem erfindungsgemäßen Schienenrad vorgesehene elastische Körper besteht typischerweise aus einem Elastomer. Dabei kann der elastische Körper als ein geschlossener Ring ausgebildet sein, der im Spalt zwischen dem Radkörper und dem Radreifen des erfindungsgemäßen Schienenrads liegt. Genauso können jedoch, in ebenfalls bekannter Weise, mehrere elastische Körper vorgesehen sein, die beispielsweise in gleichmäßigen Winkelabständen um die Drehachse des Schienenrads verteilt zwischen dem Radkörper und dem Radreifen angeordnet sind. Auch kann der jeweils zum Einsatz kommende elastische Körper zwei- oder mehrschichtig oder zwei- oder mehrteilig aufgebaut sein, um seine Eigenschaften optimal an die sich in der Praxis ergebenden Belastungen anzupassen.

Eine optimal großflächige Verspannung des Spannelements an der Schienenradscheibe bei gleichzeitig optimaler Masseverteilung ergibt sich bei einem erfindungsgemäßen Schienenrad dadurch, dass das Gegenlagerelement ringförmig ausgebildet ist. Dabei kann das Gegenlagerelement aus einem Ring bestehen oder aus zwei oder mehreren Segmenten zusammengesetzt sein, die insbesondere bogenförmig ausgebildet sind. Durch die mehrstückige Ausführung ist ein Austausch einzelner Segmente möglich, wenn diese bei der Montage oder im Einsatz beschädigt werden.

Bei einer insgesamt ringförmigen Gestaltung des Gegenlagerelements kann es zweckmäßig sein, wenn das Gegenlagerelement an einem am Radkörper ausgebildeten, um die Drehachse des Schienenrads umlaufenden und koaxial zu dieser ausgerichteten Umfangsabsatz sitzt. Auf diese Weise lässt sich eine einfache Montage bei gleichzeitig sicherem Sitz ermöglichen. Dies gilt insbesondere dann, wenn der Umfangsabsatz eine der Drehachse zugewandte Innenumfangsfläche aufweist, an der das Gegenlager anliegt.

Unabhängig davon, wie das jeweilige Gegenlagerelement ausgeführt ist, ergibt sich ein besonders sicherer Sitz, wenn das jeweilige Gegenlagerelement in einer in den Radkörper eingeformten Aufnahme sitzt. Diese Aufnahme ist erfindungsgemäß als Einsenkung in das Material des Radkörpers derart eingeformt, dass das Gegenlager mindestens spielfrei in der Aufnahme sitzt.

Dabei ist es günstig, wenn das Gegenlager bezogen auf die stirnseitige Außenfläche des Radkörpers flächenbündig in der Aufnahme eingelassen ist. Da das Gegenlagerelement erfindungsgemäß ringförmig ist, kann die Aufnahme ringnutförmig und koaxial zur Drehachse des Schienenrads ausgerichtet sein.

Durch Einpressen, Einschrumpfen, Einwalzen, Einklemmen, Einkleben, Klebschrumpfen oder in sonstiger geeigneter Weise kann das Gegenlager in die Aufnahme des aus Leichtbauwerkstoff bestehenden Radkörpers als tragende Einheit integriert werden, um den andernfalls in Folge des Einformens der Aufnahme eintretenden Tragfähigkeitsverlust zu kompensieren.

Um das Gegenlager gegen ein Verdrehen in der ihnen zugeordneten Aufnahme zu sichern, können das jeweilige Gegenlager und die ihm zugeordnete Aufnahme an ihrem Umfang mit einer von einem Kreis abweichenden Kontur versehen sein. So kann es zweckmäßig sein, das Gegenlager an seinem äußeren Umfang und die zugeordnete Aufnahme an ihrem inneren Umfang nach Art eines Polygonzugs auszubilden, wobei auch hier das Gegenlager optimaler Weise durch Einpressen, Einschrumpfen, Einkleben oder Klebschrumpfen mit dem Radkörper verbunden wird. Dabei dient die von der Kreis- bzw. Zylinderform abweichende Umfangsform von Gegenlager und Aufnahme in erster Linie dazu, Verdrehungen des Gegenlagers während des Verspannens des Spannelements zu vermeiden. Im Fall, dass als Spannmittel Befestigungsschrauben eingesetzt werden, kann dies alternativ oder ergänzend aber auch dadurch erreicht werden, dass die entsprechenden Gewindeöffnungen der Gegenlager exzentrisch in Bezug auf die Längsachse des Gegenlagers positioniert werden.

Das Spannelement kann in an sich bekannter Weise als Spannring ausgebildet sein. Dieser Ring kann beim fertig montierten Schienenrad die eine Hälfte der Felge bilden, auf der der Radreifen über den elastischen Körper abgestützt ist. Selbstverständlich ist es dabei auch hier möglich, den Spannring in zwei oder mehr Einzelsegmente aufzuteilen, um beispielsweise die Montage, De-Montage oder Reparatur zu erleichtern. Dabei erweist es sich für eine gleichmäßige Verspannung des elastischen Körpers als besonders vorteilhaft, wenn bei fertig montiertem Schienenrad die Außenumfangsfläche des Spannelements und die Außenumfangsfläche des Radkörpers in einem Schnitt längs der Drehachse des Schienenrads V-förmig aufeinander zulaufen.

Dabei erweist es sich auch bei einem erfindungsgemäßen Schienenrad als besonders günstig, wenn an der dem Spannelement zugewandten Seite des Radkörpers ein umlaufender Absatz mit einer äußeren Umfangsfläche ausgebildet ist, auf der das Spannelement beim Verspannen oder Lösen des Spannelements gleitet. Um einen optimal sicheren Sitz zu gewährleisten, kann das Spannelement im Presssitz auf der Umfangsfläche sitzen. Um dabei den Radkörper gegen Pressschäden zu schützen, kann die Umfangsfläche, auf der das Spannelement beim Verspannen gleitet, in an sich bekannter Weise mit einer reibungsmindernden oder die Verschleißbeständigkeit erhöhenden Beschichtung versehen sein. Diese Beschichtung kann beispielsweise galvanisch oder durch thermisches Spritzen aufgetragen werden. Ein guter elektrischer Übergang zwischen dem Spannelement und dem Radkörper kann dabei dadurch erreicht werden, dass als Beschichtungsmittel Molybdän eingesetzt wird, welches beispielsweise durch Flammspritzen aufgetragen wird, wobei die nach einer abschließenden Fertigbearbeitung der Schicht vorhandene Schichtdicke 0,15 bis 0,3 mm beträgt.

Nachfolgend wird die Erfindung anhand einer ein Ausführungsbeispiel darstellenden Zeichnung näher erläutert. Deren Figuren zeigen jeweils schematisch:
- Fig. 1: ein Schienenrad in einem halben Axialschnitt in einer zur Montage vorbereiteten Stellung;
- Fig. 2: das Schienenrad in einer der Fig. 1 entsprechenden Ansicht im fertig montierten Zustand;
- Fig. 3: den Radkörper des Schienenrads gemäß den Figuren 1 und 2 in einer der Fig. 1 entsprechenden Ansicht;
- Fig. 4: den Radkörper gemäß Fig. 3 in einer frontalen Ansicht;
- Fig. 5: eine alternative Ausführung eines Radkörpers in einer der Fig. 3 entsprechenden Ansicht; diese Ausführung mit mehreren Gegenlagerelementen 31 gehört nicht dem beanspruchten Gegenstand;
- Fig. 6: den Radkörper gemäß Fig. 5 in einer frontalen Ansicht;
- Fig. 7: eine alternative Ausführung eines Radkörpers in einer der Fig. 3 entsprechenden Ansicht;
- Fig. 8: den Radkörper gemäß Fig. 5 in einer frontalen Ansicht.

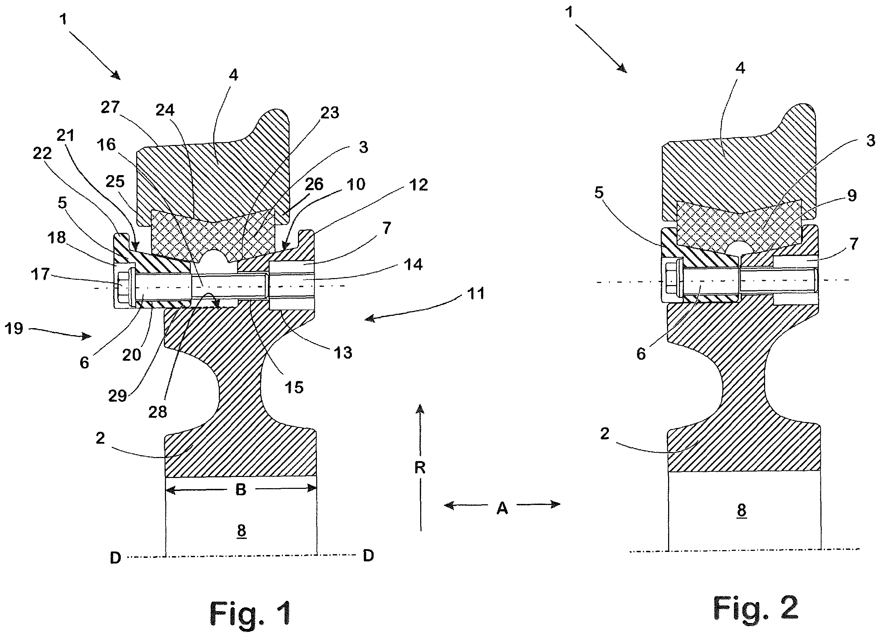

Das in den Figuren 1 und 2 dargestellte Schienenrad 1 umfasst einen Radkörper 2, einen elastischen Körper 3, einen Radreifen 4, einen Spannring 5, eine Vielzahl von als Spannmittel dienenden Befestigungsschrauben 6 und ein Gegenlagerelement 7.

Der Radkörper 2 ist in an sich bekannter Weise einstückig aus einem hierfür in der Praxis bewährten Aluminiumwerkstoff geschmiedet. Er besitzt eine zentrale Nabenöffnung 8, durch die die Drehachse D des Schienenrads 1 verläuft. Um den Umfang des Radkörpers 2 läuft ein Umfangsabsatz 9 um, der sich etwa über die Hälfte der Breite B des Radkörpers 2 erstreckt und dessen Umfangsfläche 10 in Richtung der Breitenmitte des Radkörpers 2 nach Art eines Konusrings schräg abfallend geformt ist.

An seinem axial außen liegenden, der einen Stirnseite 11 des Radkörpers 2 zugeordneten Rand trägt der Umfangsabsatz 9 einen umlaufenden Steg 12. Von der Stirnseite 11 her ist in den Umfangsabsatz 9 eine um die Drehachse D umlaufende, nach Art einer Ringnut geformte Aufnahme 13 eingeformt.

In der Aufnahme 13 ist das als Ring ausgebildete, aus einem hochfesten Stahl bestehende Gegenlagerelement 7 eingepresst. Das Gegenlagerelement 7 ist mit seiner der Stirnseite 11 zugeordneten Seite flächenbündig zur freien Oberfläche des Radkörpers 2 auf der Stirnseite 11 ausgerichtet und weist in gleichmäßigen Winkelabständen um die Drehachse D verteilte Gewindeöffnungen 14 auf. In Verlängerung der Gewindeöffnungen 14 sind in den Umfangsabsatz 9 zylindrische Durchgangsöffnungen 15 eingeformt, die sich achsparallel zur Drehachse D erstrecken und deren Durchmesser größer ist als der Durchmesser der Gewindeöffnungen 14.

Durch die Durchgangsöffnungen 15 ist der Gewindeschaft 16 jeweils einer Befestigungsschraube 6 geführt. Der Schraubenkopf 17 dieser Befestigungsschraube 6 ist gegen den Grund einer Ausnehmung 18 abgestützt, die von der anderen Stirnseite 19 des Radkörpers 2 her in den Spannring 5 eingeformt ist. Der Spannring 5 besteht beispielsweise ebenfalls aus einem Aluminiumwerkstoff und weist eine koaxial zur Durchgangsöffnung 15 ausgerichtete, zylindrische Durchgangsöffnung 20 auf, durch die ebenfalls der Gewindeschaft 16 der Befestigungsschraube 6 geführt ist. Die dem Radreifen 4 zugeordnete äußere Umfangsfläche 21 des Spannrings 5 ist, im Axialschnitt betrachtet (Fig. 1,2), unter dem gleichen Winkel in Richtung der Breitenmitte des Radkörpers 2 geneigt wie die Umfangsfläche 10 des Umfangsabsatzes 9. Im Axialschnitt betrachtet laufen die Umfangsflächen 10,21 somit V-förmig aufeinander zu. An seinem der anderen Stirnseite 19 zugeordneten Rand ist die Umfangsfläche 21 durch einen umlaufenden, radial nach außen vorstehenden Steg 22 begrenzt.

Auf den Umfangsflächen 10,21 sitzt der hier beispielsweise ringförmige elastische Körper 3. Dessen den Umfangsflächen 10,21 zugeordneten Innenumfangsflächen 23 sind entsprechend den Umfangsflächen 10,21 im Axialschnitt gesehen V-förmig angeschrägt. Ebenso sind auch die äußeren, dem Radreifen 4 zugeordneten Umfangsflächen 24 des elastischen Körpers 3 entsprechend im Axialschnitt gesehen V-förmig angeschrägt. Im Bereich der den Stirnseiten 11 und 19 zugeordneten Rändern der Innenumfangsflächen 23 läuft wiederum jeweils ein Steg 25,26 um. Auf diese Weise ist der elastische Körper 3 zwischen den Stegen 25,26 des Radreifens 4 bereits im zur Montage vorbereiteten Stadium formschlüssig gehalten und lagerichtig positioniert (Fig. 1).

Der elastische Körper 3 besteht aus einem für diesen Zweck bereits bewährten Elastomerwerkstoff. Er kann als einstückiger Ring ausgebildet oder aus mehreren einzelnen Segmenten zusammengesetzt sein. Ebenso können anstatt eines ringförmigen elastischen Körpers 3 mehrere räumlich getrennt voneinander in gleichmäßigen Winkelabständen um die Drehachse D verteilt angeordnete, blockartige elastische Körper im durch die äußeren Umfangsflächen 10,21 und die im Axialschnitt gesehen ebenfalls V-förmig aufeinander zulaufenden Innenumfangsflächen des Radreifens 4 vorgesehen sein.

Der im Bereich seiner Lauffläche 27 in üblicher Weise gestaltete Radreifen 4 besteht beispielsweise aus einem hierfür bewährten Stahlmaterial.

Umfangsseitig wird die nicht von dem Umfangsabsatz 9 eingenommene andere Hälfte der Breite B des Radkörpers 2 von einem Absatz eingenommen, dessen Umfangsfläche 28 parallel zur Drehachse D ausgerichtet ist. Auf die Umfangsfläche 28 ist der Spannring 5 mit Presssitz aufgepresst. Um dabei ein Materialfressen zu verhindern, ist die Umfangsfläche 28 in an sich bekannter Weise mit einer 0,2 mm dicken Mo-Schicht 29 beschichtet.

Zum Zusammenbau des Schienenrads 1 wird der elastische Körper 3 in den Radreifen 4 gelegt, so dass er bündig zwischen den Stegen 25,26 des Radreifens 4 sitzt. Dann wird die Kombination aus elastischem Körper 3 und Radreifen 4 von der Stirnseite 19 her auf die Umfangsfläche 10 des Umfangsabschnitts 9 geschoben.

Nun wird der Spannring 5 auf die Umfangsfläche 28 gepresst, bis das freie Ende des Gewindeschafts 16 der in ihn gesteckten Befestigungsschrauben 6 die jeweils zugeordnete Gewindeöffnung 14 im Gegenlagerelement 7 erreichen. Daraufhin werden die Befestigungsschrauben 6 angezogen. Der Spannring 5 bewegt sich dementsprechend in Achsrichtung A auf den Umfangsabschnitt 9 zu. Die dabei auftretenden Zugkräfte werden vom Gegenlagerelement 7 aufgenommen und großflächig auf den Umfangsabsatz 9 verteilt. Das Anziehen der Befestigungsschrauben 6 wird fortgesetzt, bis der Spalt zwischen dem Umfangsabsatz 9 und dem Spannring 5 annähernd geschlossen ist. Dabei gleitet der elastische Körper 3 auf den schräg verlaufenden Umfangsflächen 10,21 von Spannring 5 und Umfangsabsatz 9. Damit einhergehend wird er in radialer Richtung R geweitet und gegen die Innenumfangsflächen 23 des Radreifens 4 gedrückt.

Auf diese Weise befindet sich der elastische Körper 3 mit dem von ihm getragenen Radreifen 4 in der vorgesehenen Position, wenn der Spannring 5 seine Endposition auf der Umfangsfläche 28 erreicht hat. Gleichzeitig ist der elastische Körper 3 in der vorgesehenen Weise vorgespannt.

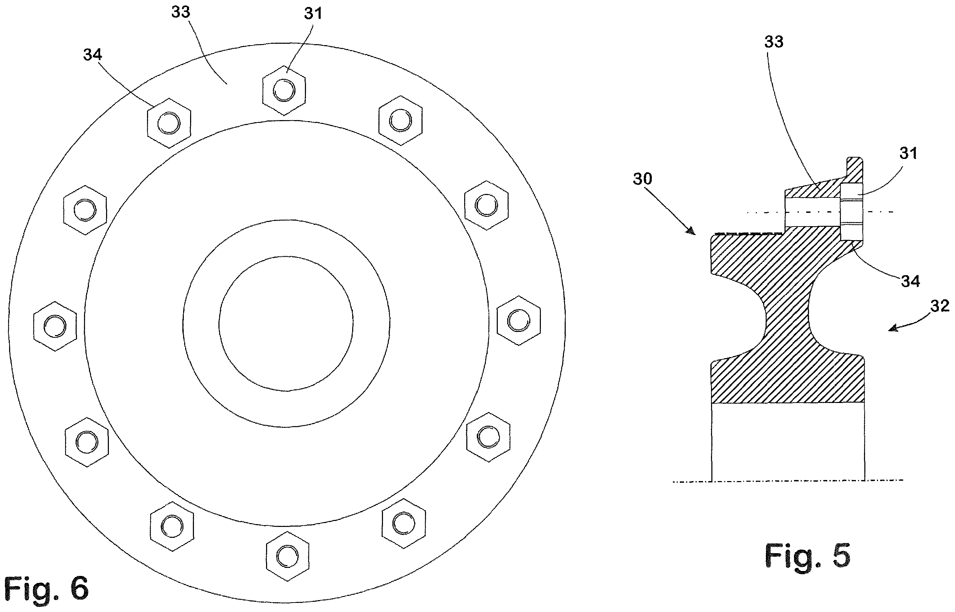

Die Grundgestalt des in den Fig. 5 und 6 dargestellten Radkörpers 30 ist gleich der Gestaltung des Radkörpers 2. Allerdings ist hier jeder Befestigungsschraube 6 ein eigenes, jeweils eine Gewindeöffnung aufweisendes Gegenlagerelement 31 und jedem Gegenlagerelement 31 eine eigene, von der ersten Stirnseite 32 des Radkörpers 30 her in dessen Umfangsabschnitt 33 eingeformte Aufnahme 34 zugeordnet. Die Aufnahmen 34 weisen dabei eine sechskantförmige Innenkontur auf. Dementsprechend sind die Gegenlagerelemente 31 an ihrem äußeren Umfang entsprechend sechskantförmig geformt. Die Abmessungen der Gegenlagerelemente 31 sind dabei so an die Abmessungen der Aufnahme 34 angepasst, dass die Gegenlagerelemente 31 mit einem vorbestimmten Presssitz in der jeweils zugeordneten Aufnahme 34 sitzen und dabei bündig zur freien Oberfläche des Radkörpers 30 an der Stirnseite 32 ausgerichtet sind. Durch die Sechskantform der Aufnahmen 34 und der Gegenlagerelemente 31 ist eine Verdrehsicherung erreicht, durch die ein unbeabsichtigtes Durchdrehen oder Herausschrauben der Gegenlagerelemente 31 beim Anziehen oder Lösen der Befestigungsschrauben 6 verhindert ist.

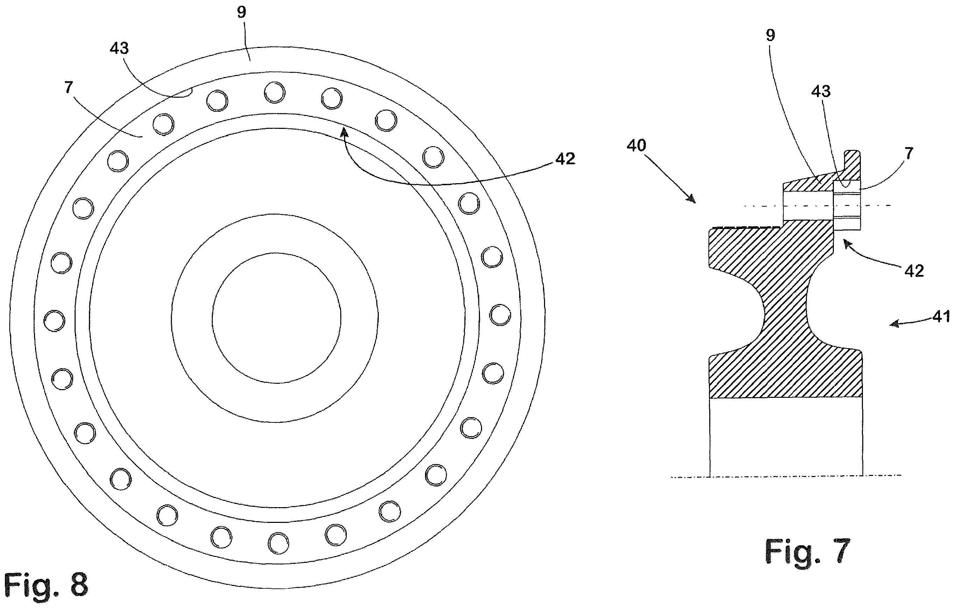

Bei der in den Figuren 7 und 8 gezeigten Ausführung stimmt die Grundgestalt des Radkörpers 40 wiederum mit der des Radkörpers 2 überein. Jedoch ist hier von der einen Stirnseite 41 her anstelle einer nutförmigen Aufnahme ein umlaufender Absatz 42 in den Radkörper 2 eingeformt. Das ringförmige Gegenlagerelement 7 sitzt auf dem Absatz 42. Dabei ist der Innendurchmesser der um die Drehachse D umlaufenden Innenumfangsfläche 43 des Absatzes 42 so an die Außenabmessungen des Gegenlagerelements 7 angepasst, dass das Gegenlagerelement 7 im zwischen der äußeren Umfangsfläche des Gegenlagerelements 7 und der Innenumfangsfläche 43 des Absatzes 42 wirkenden Presssitz an dem Absatz 42 gehalten ist.

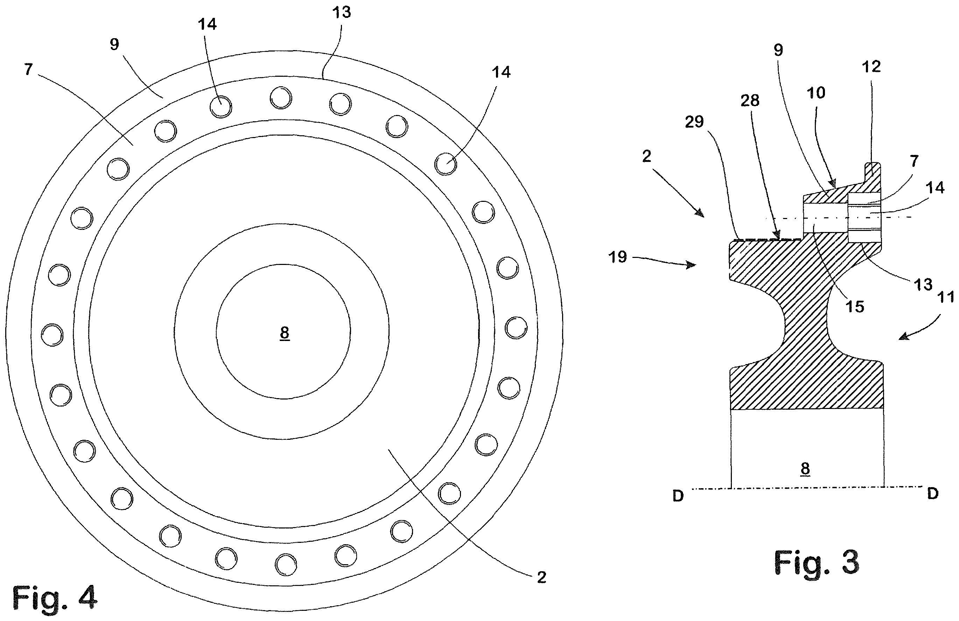

Die Montage der in den Figuren 5 - 8 dargestellten Varianten der Erfindung erfolgt in derselben Weise, wie sie oben für das in den Figuren 1 - 4 gezeigte Ausführungsbeispiel angegeben worden ist.

### BEZUGSZEICHEN

- 1: Schienenrad
- 2: Radkörper
- 3: elastischer Körper
- 4: Radreifen
- 5: Spannring (Spannelement)
- 6: Befestigungsschrauben (Spannmittel)
- 7: Gegenlagerelement
- 8: Nabenöffnung des Radkörpers 2
- D: Drehachse des Schienenrads 1
- 9: Umfangsabsatz des Radkörpers 2
- B: Breite des Radkörpers 2
- 10: Umfangsfläche des Umfangsabsatzes 9
- 11: Stirnseite des Radkörpers 2
- 12: umlaufender Steg des Umfangsabsatzes 9
- 13: Aufnahme für das Gegenlagerelement 7
- 14: Gewindeöffnungen des Gegenlagerelements 7
- 15: zylindrische Durchgangsöffnungen des Umfangsabsatzes 9
- 16: Gewindeschaft der Befestigungsschrauben 6
- 17: Schraubenkopf der Befestigungsschrauben 6
- 18: Ausnehmungen 18 des Spannrings 5
- 19: andere Stirnseite des Radkörpers 2
- 20: Durchgangsöffnungen des Spannrings 5
- 21: äußere Umfangsfläche des Spannrings 5
- 22: Steg
- 23: Innenumfangsflächen des elastischen Körpers 3
- 24: äußere Umfangsflächen des elastischen Körpers 3
- 25,26: Stege des Radreifens 4
- 27: Lauffläche des Radreifens 4
- 28: Umfangsfläche, auf der der Spannring 5 sitzt
- 29: verschleißbeständige und reibungsmindernde Mo-Schicht
- A: Achsrichtung
- R: radiale Richtung
- 30: Radkörper
- 31: Gegenlagerelement
- 32: erste Stirnseite des Radkörpers 30
- 33: Umfangsabschnitt
- 34: Aufnahmen
- 40: Radkörper
- 41: Stirnseite des Radkörpers 40
- 42: umlaufender Absatz
- 43: Innenumfangsfläche des Absatzes 42

## Patentansprüche

1. Mehrteiliges Schienenrad mit einem Radreifen (4), mit einem Radkörper (2), mit einem zwischen dem Radreifen (4) und dem Radkörper (2) angeordneten elastischen Körper (3), über den der Radreifen (4) auf dem Radkörper (2) abgestützt ist, sowie mit mindestens einem von der einen Stirnseite her an den Radkörper (2) angesetzten Spannelement, über das der elastische Körper (3) mittels an dem Radkörper (2) angreifender Spannmittel (6) gegen den Radkörper (2) und den Radreifen (4) verspannt ist, wobei der Radkörper (2) mindestens in dem Bereich, gegen den das Spannmittel (6) wirkt, aus einem Leichtmetallwerkstoff besteht, **dadurch gekennzeichnet, dass** an der dem Spannelement (5) axial gegenüberliegenden Stirnseite (11) des Radkörpers (2) als Gegenlager, an dem die Spannmittel (6) angreifen, mindestens ein ringförmiges Gegenlagerelement (7) vorgesehen ist, das aus einem Werkstoff besteht, der eine höhere Festigkeit aufweist als der Leichtmetallwerkstoff des Radkörpers (2), wobei das Gegenlagerelement (7) in einer koaxial zur Drehachse (D) des Schienenrads (1) ausgerichteten, als Einsenkung in den Radkörper (2) eingeformten Aufnahme (13) mindestens spielfrei sitzt.

2. Schienenrad nach Anspruch 1, **dadurch gekennzeichnet, dass** die Spannmittel Schrauben (6) sind, welche in an dem Gegenlagerelement (7) vorgesehene Gewindeöffnungen (14) greifen.

3. Schienenrad nach einem der voranstehenden Ansprüche, **dadurch gekennzeichnet, dass** das Gegenlagerelement (7) aus einem hochfesten Stahl besteht.

4. Schienenrad nach einem der voranstehenden Ansprüche, **dadurch gekennzeichnet, dass** der Radkörper (2) einstückig aus dem Leichtmetallwerkstoff gefertigt ist.

5. Schienenrad nach einem der voranstehenden Ansprüche, **dadurch gekennzeichnet, dass** der elastische Körper (3) ein Elastomerkörper ist.

6. Schienenrad nach einem der voranstehenden Ansprüche, **dadurch gekennzeichnet, dass** das Gegenlagerelement (7) an einem am Radkörper (2) ausgebildeten, um die Drehachse (D) des Schienenrads (1) umlaufenden und koaxial zu dieser ausgerichteten Umfangsabsatz (9) sitzt.

7. Schienenrad nach Anspruch 6, **dadurch gekennzeichnet, dass** der Umfangsabsatz (9) eine der Drehachse (D) zugewandte Innenumfangsfläche (43) aufweist, an der das Gegenlagerelement (7) anliegt.

8. Schienenrad nach einem der voranstehenden Ansprüche, **dadurch gekennzeichnet, dass** das Gegenlagerelement (7) durch Einpressen, Einschrumpfen, Einwalzen, Einklemmen, Einkleben oder Klebschrumpfen in die Aufnahme (13) des Radkörpers integriert ist.

9. Schienenrad nach einem der voranstehenden Ansprüche, **dadurch gekennzeichnet, dass** das Spannelement (5) ringförmig ausgebildet ist.

10. Schienenrad nach einem der voranstehenden Ansprüche, **dadurch gekennzeichnet, dass** an der dem Spannelement (5) zugewandten Seite (19) des Radkörpers (2) ein umlaufender Absatz mit einer Umfangsfläche (28) ausgebildet ist, auf der das Spannelement (5) beim Verspannen oder Lösen des Spannelements (5) gleitet.

11. Schienenrad nach Anspruch 10, **dadurch gekennzeichnet, dass** die Umfangsfläche (28) mit einer reibungsmindernden oder die Verschleißbeständigkeit erhöhenden Beschichtung (29) versehen ist.

12. Schienenrad nach einem der voranstehenden Ansprüche, **dadurch gekennzeichnet, dass** bei fertig montiertem Schienenrad (1) die Außenumfangsfläche (21) des Spannelements (5) und die Außenumfangsfläche (10) des Radkörpers (2) in einem Schnitt längs der Drehachse (D) V-förmig aufeinander zulaufen.

## Claims

1. Multi-part rail wheel having a wheel tyre (4), a wheel body (2), an elastic body (3) arranged between the wheel tyre (4) and the wheel body (2), via which the wheel tyre (4) is supported on the wheel body (2), as well as having at least one tension element attached to the wheel body (2) away from the one end side, via which tension element the elastic body (3) is tensioned against the wheel body (2) and the wheel tyre (4) by means of tension means (6) acting on the wheel body (2), wherein the wheel body (2) consists of a light metal material at least in the region, against which the tension means (6) acts, **characterised in that** on the end side (11) of the wheel body (2) axially opposite the tension element (5) is provided at least one annular counter bearing element (7) as the counter bearing on which the tension means (6) act, said counter bearing element consisting of a material which has a higher strength than the light metal material of the wheel body (2), wherein the counter bearing element (7) sits in a receiving portion (13) aligned coaxially in relation to the rotational axis (D) of the rail wheel (1) and formed into the wheel body (2) as a depression.

2. Rail wheel according to claim 1, **characterised in that** the tension means are screws (6), which engage into thread openings (14) provided on the counter bearing element (7).

3. Rail wheel according to any one of the preceding claims, **characterised in that** the counter bearing element (7) consists of a high-strength steel.

4. Rail wheel according to any one of the preceding claims, **characterised in that** the wheel body (2) is made in one piece from the light metal material.

5. Rail wheel according to any one of the preceding claims, **characterised in that** the elastic body (3) is an elastomer body.

6. Rail wheel according to any one of the preceding claims, **characterised in that** the counter bearing element (7) sits on a circumferential offset (9) formed on the wheel body (2), running around the rotational axis (D) of the rail wheel (1) and aligned coaxially thereto.

7. Rail wheel according to claim 6, **characterised in that** the circumferential offset (9) has an inner circumferential surface (43) facing the rotational axis (D), against which the counter bearing element (7) abuts.

8. Rail wheel according to any one of the preceding claims, **characterised in that** the counter bearing element (7) is integrated into the receiving portion (13) of the wheel body by pressing in, shrinking, rolling in, clamping, adhering or adhesive shrinking.

9. Rail wheel according to any one of the preceding claims, **characterised in that** the tension element (5) is designed in an annular shape.

10. Rail wheel according to any one of the preceding claims, **characterised in that** on the side (19) of the wheel body (2) facing the tension element (5) is designed a circumferential offset with a circumferential surface (28) on which the tension element (5) slides when the tension element (5) is tensioned or released.

11. Rail wheel according to claim 10, **characterised in that** the circumferential surface (28) is provided with a coating (29) which reduces friction or increases wear-resistance.

12. Rail wheel according to any one of the preceding claims, **characterised in that** when the rail wheel (1) is completely mounted, the outer circumferential surface (21) of the tension element (5) and the outer circumferential surface (10) of the wheel body (2) run towards one another in a section along the rotational axis (D) in a V-shaped manner.

## Revendications

1. Roue ferroviaire en plusieurs parties avec un bandage (4), avec un moyeu de roue (2), et avec un corps élastique (3), agencé entre le bandage (4) et le moyeu de roue (2), par l'intermédiaire duquel le bandage (4) s'appuie sur le moyeu de roue (2), et avec au moins un élément de serrage appliqué sur le moyeu de roue (2) à partir d'un côté frontal, à l'aide duquel le corps élastique (3), grâce au moyen de serrage (6) s'engrenant sur le moyeu de roue (2), est serré contre le moyeu de roue (2) et le bandage (4), le moyeu de roue (2) agissant au moins dans la zone contre laquelle agit le moyen de serrage (6) se composant d'un matériau en métal léger, **caractérisée en ce que** l'on prévoit comme butée au moins un élément de butée (7) annulaire sur la face frontale (11) du moyeu de roue (2) opposée axialement à l'élément de serrage, cet élément de butée (7) annulaire se composant d'un matériau qui présente une résistance élevée par rapport au matériau en métal léger du moyeu de roue (2), **en ce que** l'élément de butée (7) est calé sans jeu dans un logement (13) formé comme enfoncement dans le moyeu de roue (2) et orienté de manière coaxiale par rapport à l'axe de rotation (D) de la roue ferroviaire.

2. Roue ferroviaire selon la revendication 1, **caractérisée en ce que** les moyens de serrage sont des vis (6) qui s'engrènent dans les ouvertures filetées (14) prévues sur l'élément de butée (7).

3. Roue ferroviaire selon l'une des revendications précédentes, **caractérisée en ce que** l'élément de butée (7) se compose d'un acier à haute résistance.

4. Roue ferroviaire selon l'une des revendications précédentes, **caractérisée en ce que** le moyeu de roue (2) est fabriqué en une seule pièce à partir du matériau de métal léger.

5. Roue ferroviaire selon l'une des revendications précédentes, **caractérisée en ce que** le corps élastique (3) est un corps élastomère.

6. Roue ferroviaire selon l'une des revendications précédentes, **caractérisée en ce que** l'élément de butée (7, 31) est calé sur un épaulement périphérique (9) conçu sur le moyeu de roue (2) s'étendant de manière périphérique autour de l'axe de rotation (D) de la roue ferroviaire (1) et orienté de manière coaxiale par rapport à celle-ci.

7. Roue ferroviaire selon la revendication 6 précédentes, **caractérisée en ce que** l'épaulement périphérique (9) présente une surface périphérique intérieure (43) orientée vers l'axe de rotation (D), contre laquelle s'appuie l'élément de butée (7).

8. Roue ferroviaire selon l'une des revendications précédentes **caractérisée en ce que** l'élément de butée (7) est intégré par chassage, rétractation, sertissage, pincement, collage ou contraction par collage dans le logement (13) du moyeu de roue.

9. Roue ferroviaire selon l'une des revendications précédentes, **caractérisée en ce que** l'élément de serrage (5) est conçu annulaire.

10. Roue ferroviaire selon l'une des revendications précédentes, **caractérisée en ce que**, sur le côté (19) du moyeu de roue (2) dirigé vers l'élément de serrage (5) est formé un épaulement périphérique avec une surface périphérique (28) sur laquelle l'élément de serrage (5) glisse lors du serrage ou du desserrage de l'élément de serrage (5).

11. Roue ferroviaire selon la revendication 10, **caractérisée en ce que** la surface périphérique (28) est pourvue d'un revêtement (29) améliorant la résistance à l'usure ou réduisant le frottement.

12. Roue ferroviaire selon l'une des revendications précédentes, **caractérisée en ce que**, lors d'une roue ferroviaire (1) déjà montée, la surface périphérique extérieure (21) de l'élément de serrage (5) et la surface périphérique extérieure (10) du moyeu de roue (2) se rapprochent en forme de V en une coupe le long de l'axe de rotation (D).
